# FASCICULE DE BREVET EUROPEEN

(11) **EP 4 022 173 B1**
(45) Date de publication et mention de la délivrance du brevet: **27.09.2023**
(21) Numéro de dépôt: 20775389.8
(22) Date de dépôt: 27.08.2020
(51) Int. Cl.: F01D 5/28, B29C 70/24

(54) **HYBRIDATION DES FIBRES DU RENFORT FIBREUX D'UNE AUBE DE SOUFFLANTE**
HYBRIDISIERUNG DER FASERN DER FASERVERSTÄRKUNG EINER GEBLÄSESCHAUFEL
HYBRIDIZATION OF THE FIBERS OF THE FIBROUS REINFORCEMENT OF A FAN BLADE

(30) Priorité: 28.08.2019 FR 1909468
(43) Date de publication de la demande: 06.07.2022
(73) Titulaire: SAFRAN AIRCRAFT ENGINES, 75015 Paris (FR)
(72) Inventeur: SALAS DE LOS RIOS, Paula, 77550 MOISSY-CRAMAYEL (FR); DE GAILLARD, Thomas Alain, 77550 MOISSY-CRAMAYEL (FR); FIXY, Teddy, 77550 MOISSY-CRAMAYEL (FR)
(74) Mandataire: Regimbeau
(86) Numéro de dépôt international: PCT/FR2020/051506
(87) Numéro de publication internationale: WO 2021/038173

(56) Documents cités:
- EP-A1- 3 222 815
- EP-A1- 3 406 778
- FR-A1- 2 498 520
- FR-A1- 3 040 909

## Description

### DOMAINE DE L'INVENTION

L'invention concerne de manière générale le domaine des turbomachines, et plus particulièrement celui des aubes de soufflantes de ces turbomachines et leur procédé de fabrication.

L'invention s'applique plus particulièrement aux aubes de soufflante en matériau composite et leur interaction avec l'entrée de la veine primaire.

### ETAT DE LA TECHNIQUE

Les aubes de turbomachine, et notamment les aubes de soufflante, subissent d'importantes contraintes mécaniques et thermiques et doivent satisfaire à des conditions strictes de poids et d'encombrement. Il a donc été proposé d'utiliser des aubes dans un matériau composite comportant un renfort fibreux densifié par une matrice polymère, qui sont plus légères par rapport à des aubes métalliques à caractéristiques propulsives équivalentes et qui ont une tenue à la chaleur satisfaisante.

Lors de la certification et de la vie d'un moteur, les aubes de soufflante sont soumises à des ingestions d'oiseaux et de grêlons. Toutefois, selon le type de l'objet impactant l'aube (et notamment sa taille, sa masse) et selon le type de soufflante (vitesse de rotation et nombre d'aubes), les zones privilégiées d'initiation et de propagation des endommagements sont différentes. Le comportement mécanique des aubes de soufflante est donc optimisé pendant la phase de conception des aubes pour respecter les règles de certification.

Par ailleurs, les conceptions actuelles tendent à réduire l'épaisseur de la structure en matériau composite des aubes dans les zones du bord d'attaque, du bord de fuite voire sur l'ensemble de la structure afin d'améliorer les performances aérodynamiques. A iso-matériau et iso-loi d'empilage, la capacité de l'aube à résister à un impact se trouve par conséquent réduite.

Le document EP 3 222 815 A1 décrit une aube de soufflante d'une turbomachine comprenant une structure en matériau composite.

### EXPOSE DE L'INVENTION

Un objectif de l'invention est donc de remédier aux inconvénients précités, en proposant une aube de soufflante pour une turbomachine dont le comportement à l'ingestion est amélioré.

Pour cela, l'invention propose une aube de soufflante d'une turbomachine comprenant une structure en matériau composite comprenant un renfort fibreux obtenu par tissage tridimensionnel de torons et une matrice dans laquelle est noyé le renfort fibreux,
- la structure en matériau composite comprenant un bord d'attaque et un bord de fuite,
- le renfort fibreux comprenant une première portion formant le bord de fuite et une deuxième portion formant tout ou partie du bord d'attaque,
- les torons du renfort fibreux comprenant des premiers torons présentant un allongement à la rupture prédéfini.

Par ailleurs, les torons du renfort fibreux comprennent en outre des deuxièmes torons présentant un allongement à la rupture supérieur à celui des premiers torons. De plus, la première portion comprend tout ou partie des premiers torons tandis que la deuxième portion comprend tout ou partie des deuxièmes torons.

Certaines caractéristiques préférées mais non limitatives de l'aube décrite ci-dessus sont les suivantes, prises individuellement ou en combinaison :
- la première portion est dépourvue de deuxièmes torons et la deuxième portion comprend des torons de chaîne et des torons de trame et les torons de chaîne de la deuxième portion sont dépourvus de premiers torons.
- la deuxième portion s'étend à distance du sommet de l'aube.
- l'aube comprend en outre une pale à profil aérodynamique propre à s'étendre dans un flux d'air, un pied configuré pour être fixé à un disque de la soufflante et une échasse s'étendant entre le pied et la pale, et dans laquelle la deuxième portion forme le bord de fuite sur une partie d'une hauteur de la pale.
- la deuxième portion s'étend sur au moins 35 % d'une hauteur de la pale, par exemple entre 35 % et 100 % de la hauteur de la pale.
- le renfort fibreux comprend en outre une troisième portion s'étendant entre la première portion et la deuxième portion, une densité des deuxièmes torons augmentant progressivement dans la troisième portion de la première portion vers la deuxième portion.
- la troisième portion s'étend sur une distance comprise entre 5% et 30% de la hauteur de la pale.
- les premiers et deuxièmes torons comprennent des torons de chaine distribués de sorte à former des colonnes de chaîne, un pourcentage, par rapport au nombre total de torons de chaîne dans une colonne de chaîne de la troisième portion, de deuxièmes torons introduits entre deux colonnes de torons de chaîne immédiatement adjacentes étant au plus égal à 30 %, et de préférence compris entre 5 % et 15 %.
- l'aube présente en outre une pluralité de plans de chaîne coupant les colonnes de chaîne, chaque plan de chaîne étant séparé d'un plan de chaîne immédiatement adjacent par une ligne de torons de trame, au plus 30 % des torons de chaîne étant modifiés entre deux plans de chaîne immédiatement adjacents dans la troisième portion qui est intermédiaire, et de préférence compris entre 5 % et 15 % des torons de chaîne.
- l'aube comprend en outre une paroi intrados et une paroi extrados, dans laquelle la deuxième portion du renfort forme au moins en partie la paroi intrados de l'aube tandis que la paroi extrados ne comprend pas de deuxièmes torons.
- la deuxième portion s'étend sur une portion de longueur de corde comprise entre 10 % et 50 % de la longueur de corde totale de l'aube, de préférence comprise entre 20 % et 40 % de ladite longueur de corde totale.
- les premiers torons présentent un module d'Young supérieur au module d'Young des deuxièmes torons.
- l'allongement à la rupture des deuxièmes torons est compris entre 1.5 et 3 fois l'allongement à la rupture des premiers torons.
- les premiers torons comprennent des fibres de carbone ou d'aramide dont le module d'Young est supérieur à 250 GPa et l'allongement à la rupture est compris entre 1.5 % et 2.5 %.
- l'allongement à la rupture des deuxièmes torons est compris entre 3% et 6%, de préférence entre 4% et 5%.
- les deuxièmes torons comprennent des fibres de verre ou des fibres de basalte.
- les deuxièmes torons comprennent des fils de chaîne.

Selon un deuxième aspect, l'invention concerne une soufflante pour une turbomachine comprenant une pluralité d'aubes comme décrites ci-dessus.

Selon un troisième aspect, l'invention propose une turbomachine comprenant une telle soufflante et un aéronef comprenant cette turbomachine.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
La figure 1 est une vue schématique représentant un exemple de renfort fibreux pour une aube de soufflante conforme à un mode de réalisation, sur laquelle l'introduction de deuxièmes torons et la sortie de premiers torons dans la portion intermédiaire ont été schématisés ainsi que cinq plans de chaîne C1 à C5.
Les figures 2a à 2d représentent de manière schématique et partielle des plans de chaîne C1 à C4 représentés sur la figure 1.
Les figures 3 et 4 représentent de manière schématique et partielle des exemples de variation du plan de chaîne C5 représenté sur la figure 1 qui coupe la deuxième portion du renfort.
La figures 5 et 6 illustrent de manière schématique des variantes de réalisation de la forme de la deuxième portion.

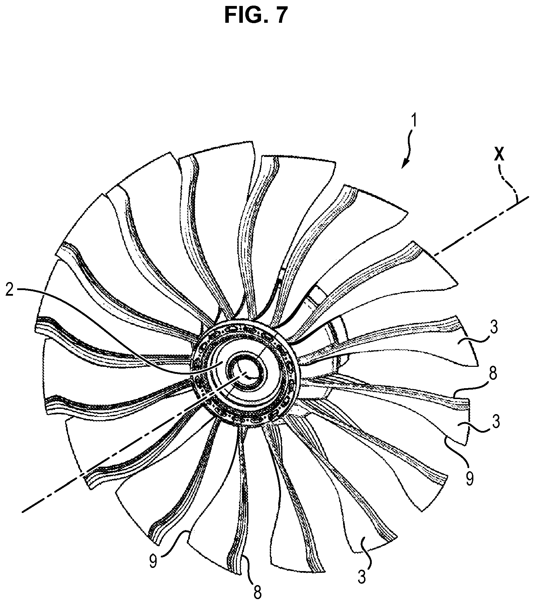

La figure 7 est une vue en perspective d'un exemple de réalisation d'une soufflante comprenant des aubes conforme à l'invention.

Sur l'ensemble des figures, les éléments similaires portent des références identiques.

### DESCRIPTION DETAILLEE DE L'INVENTION

Dans la présente demande, l'amont et l'aval sont définis par rapport au sens d'écoulement normal du gaz dans la soufflante 1 à travers la turbomachine. Par ailleurs, on appelle axe de révolution de la soufflante 1, l'axe X de symétrie radiale de la soufflante 1. La direction axiale correspond à la direction de l'axe X de la soufflante 1, et une direction radiale est une direction perpendiculaire à cet axe et passant par lui.

Une soufflante 1 de turbomachine comprend un disque 2 de soufflante 1 portant une pluralité d'aubes 3 de soufflante 1 associées à des plateformes inter-aubes.

Chaque aube 3 comprend une structure en matériau composite comportant un renfort fibreux 4 obtenu par tissage tridimensionnel et une matrice dans laquelle est noyé le renfort fibreux 4.

Cette structure en matériau composite comprend un pied 5, une échasse 6 et une pale 7 à profil aérodynamique. Le pied 5 est destiné à permettre la fixation de l'aube au disque 2 de soufflante et s'étend à cet effet entre un fond d'une empreinte formée dans le disque 2 et la sortie des portées de l'empreinte. La pale 7 à profil aérodynamique quant à elle est propre à être placée dans un flux d'air, lorsque la turbomachine est en fonctionnement, afin de générer une portance. Enfin, l'échasse 6 correspond à la zone de la pale 7 qui s'étend entre le pied 5 et la pale 7, c'est-à-dire entre la sortie des portées et les plateformes inter-aubes.

L'aube 3 comprend également, de manière connue en soi, un bord d'attaque 8, un bord de fuite 9, une paroi intrados I et une paroi extrados E. Le bord d'attaque 8 est configuré pour s'étendre en regard de l'écoulement des gaz entrant dans la turbomachine. Il correspond à la partie antérieure d'un profil aérodynamique qui fait face au flux d'air et qui divise l'écoulement d'air en un écoulement d'intrados et en un écoulement extrados. Le bord de fuite 9 quant à lui correspond à la partie postérieure du profil aérodynamique, où se rejoignent les écoulements intrados et extrados.

Enfin, la structure est formée d'une pluralité de sections d'aube 3 empilées depuis le pied 5 selon un axe d'empilement Z s'étendant radialement par rapport à l'axe de révolution X de la soufflante 1.

Dans ce qui suit, par « hauteur » on désignera une distance suivant l'axe d'empilement Z. Ainsi, la pale 7 présente une hauteur H correspondant à la distance suivant l'axe d'empilement Z entre sa limite inférieure 10, à l'intersection avec l'échasse 6, et son sommet 11. La hauteur H de la pale 7 est mesurée à l'intersection entre le bord d'attaque 8 et la limite inférieure 10 de la pale 7.

Le renfort fibreux 4 peut être formé à partir d'une préforme fibreuse en une seule pièce obtenue par tissage tridimensionnel ou multicouche avec épaisseur évolutive. Il comprend des torons de chaîne et de trame qui peuvent notamment comprendre des fibres en carbone, en verre, en basalte, et/ou en aramide. La matrice quant à elle est typiquement une matrice polymère, par exemple époxyde, bismaléimide ou polyimide. L'aube 3 est alors formée par moulage au moyen d'un procédé d'injection sous vide de résine du type RTM (pour « Resin Transfer Moulding), ou encore VARRTM (pour Vacuum Resin Transfer Molding).

Les torons formant le renfort fibreux 4 comprennent des premiers torons 12 présentant un allongement à la rupture prédéfini et des deuxièmes torons 14 présentant un allongement à la rupture supérieur à celui des premiers torons 12. Le renfort fibreux 4 est donc obtenu par hybridation des torons le constituant afin d'utiliser au mieux les propriétés mécaniques de chaque toron en fonction des zones de l'aube 3 et du type de sollicitation.

Les premiers torons 12 ont de préférence un module d'Young élevé, par exemple supérieur à 250 GPa, et ont pour fonction de permettre de respecter les critères de conception de l'aube 3, et notamment le statut fréquentiel de l'aube 3. Ces premiers torons 12 sont donc utilisés dans le tissage du renfort fibreux 4 pour former la portion du renfort 4 (ou première portion 13) qui comprend globalement les parties basses et épaisses de l'aube 3 (à savoir ici le pied 5 de l'aube 3, l'échasse 6 et une partie inférieure de la pale 7) et le bord de fuite 9 pour que les fréquences propres de l'aube 3 soient élevées. Cela permet ainsi de limiter ou du moins d'éloigner les croisements fréquentiels entre les premiers modes propres de l'aube 3, énergétiques, et les harmoniques moteur. Dans une forme de réalisation, seuls les premiers torons 12 sont utilisés comme fils de chaîne et de trame dans le tissage de la première portion 13.

Les deuxièmes torons 14 quant à eux, dont la résistance à la rupture est plus grande que celle des premiers torons 12, ont pour fonction de limiter l'initiation et la propagation des endommagements de l'aube 3 lors d'ingestion d'objets, et notamment d'oiseaux. Ces deuxièmes torons 14 sont donc utilisés dans le tissage du renfort fibreux 4 pour former la portion du renfort 4 (ou deuxième portion 15) qui comprend tout ou partie du bord d'attaque 8, dans la mesure où cette zone est fortement sollicitée en cas d'ingestion d'objet, et notamment d'oiseaux lourds (« large bird » en anglais). De préférence, l'allongement à la rupture des deuxièmes torons 14 est compris entre 1.5 et 3 fois l'allongement à la rupture des premiers torons 12. Dans une forme de réalisation, seuls les deuxièmes torons 14 sont utilisés comme fils de chaîne dans le tissage de la deuxième portion 15.

Afin d'optimiser la résistance de l'aube 3 aux impacts d'objets, les deuxièmes torons 14 sont des torons de chaîne du renfort 4 (c'est-à-dire des torons s'étendant suivant l'axe d'empilement Z des sections d'aube 3). En effet, les endommagements (voire la rupture de l'aube) sont initiés selon le sens corde, la fissure étant dans le sens radial, de sorte que la tenue du renfort doit être renforcée dans le sens chaîne. Par ailleurs, la deuxième portion 15 s'étend de préférence en partie centrale de l'aube 3 (qui sera détaillée par la suite de la description), à distance de sa partie inférieure et de son sommet 11.

Le renfort 4 comprend en outre une portion intermédiaire 16 s'étendant entre la première portion 13 et la deuxième portion 15 qui est formée à la fois par les premiers torons 12 et les deuxièmes torons 14. Dans une forme de réalisation, seuls les premiers et deuxièmes torons 12, 14 sont utilisés comme fils de chaîne et de trame dans le tissage de la portion intermédiaire 16.

Cette portion intermédiaire 16 est configurée pour servir d'interface entre la première portion 13 et la deuxième portion 15 afin de limiter les fragilités dues à des discontinuités de matériaux. Lorsque les torons de chaîne du renfort fibreux 4 comprennent uniquement des premiers torons 12 dans la première portion 13 de l'aube 3 et uniquement des deuxièmes torons 14 dans la deuxième portion 15 de l'aube 3, et que la première portion 13 et la deuxième portion 15 sont bout à bout dans le renfort 4, l'aube 3 ainsi obtenue permet effectivement d'éviter les endommagements de l'aube 3 dans les zones comprenant les deuxièmes torons 14. Toutefois, le Demandeur s'est aperçu du fait qu'en l'absence de portion intermédiaire 16, c'est-à-dire en introduisant de manière abrupte des deuxièmes torons 14 et en supprimant simultanément les premiers torons 12 à l'interface entre la première portion 13 et la deuxième portion 15 du renfort fibreux 4, l'aube 3 obtenue risquait d'être fortement endommagée au niveau de cette interface en cas d'impact, car l'interface entre les deux portions 11, 12 du renfort 4 est fragilisée par la discontinuité forte des propriétés matériaux.

La portion intermédiaire 16 permet ainsi de faire une transition entre les propriétés matériaux de la première portion 13 et les propriétés matériaux de la deuxième portion 15. Pour cela, la densité des deuxièmes torons 14 est progressivement augmentée au sein de la portion intermédiaire 16, de la première portion 13 vers la deuxième portion 15. Plus précisément, à l'interface entre la première portion 13 et la portion intermédiaire 16, la densité des deuxièmes torons 14 est très faible tandis que la densité des premiers torons 12 est très forte. En revanche, à l'interface entre la portion intermédiaire 16 et la deuxième portion 15, la densité des deuxièmes torons 14 est très forte tandis que la densité des premiers torons 12 est très faible.

La deuxième portion 15 s'étend sur une portion de longueur de corde comprise entre 10 % et 50 % de la corde totale de l'aube 3 en tout point de l'axe d'empilement Z de l'aube 3. De préférence, la portion de longueur de corde est comprise entre 20 % et 40 % de la corde totale de l'aube 3, par exemple de l'ordre de 30%. Par corde, on comprendra ici, pour une section donnée de l'aube 3 (et donc pour un point donné de l'axe d'empilement Z), le segment de droite sensiblement axial qui connecte le bord d'attaque 8 au bord de fuite 9 de l'aube 3.

Comme indiqué précédemment, la deuxième portion 15 s'étend en partie centrale de l'aube 3, sur une partie seulement de la hauteur H de la pale 7. Dans une forme de réalisation, le bord inférieur de la deuxième portion 15 est à une distance (mesurée à partir de la limite inférieure 10 de l'aube 3) égale à au moins 10 % de la hauteur H de la pale 7, de préférence à une distance égale à environ 35 % de cette hauteur H. Par ailleurs, le bord supérieur de la deuxième portion 15 est à une distance (mesurée à partir de la limite inférieure 10 de l'aube 3) égale à au plus 70 % de la hauteur H de la pale 7, de préférence à une distance égale à environ 65 % de cette hauteur H.

Dans un exemple de réalisation, afin d'optimiser la résistance de l'aube 3 aux impacts d'oiseaux lourds, le bord inférieur 15a de la deuxième portion 15 est à une distance égale à 30 % de la hauteur H de la pale 7 et son bord supérieur 15b à une distance égale à 65 % de ladite hauteur H (ces distances étant mesurées depuis la limite inférieure 10 de l'aube 3). Cet exemple de réalisation permet à la fois d'améliorer le comportement de l'aube 3 en cas d'ingestion d'oiseaux lourds mais également de faciliter sa fabrication et de limiter le dévrillage supplémentaire induit par le fait que les deuxièmes torons 14 présentent un plus faible module d'Young que les premiers torons 12.

Avantageusement, le pied 5 et l'échasse 6 ne comportant que des premiers torons (la deuxième portion 15 s'étendant à distance de la limite inférieure 10 de l'aube 3), la certification de la zone pied 5/échasse 6 de l'aube 3 et les contraintes de fabrication sont simplifiées.

Dans tous les cas, le dimensionnement de l'aube 3 permet de déterminer la distance à partir de laquelle introduire des deuxièmes torons 14 dans le renfort fibreux 4, afin d'allier raideur nécessaire pour le statut fréquentiel (premiers torons 12) et allongement à rupture (deuxièmes torons 14) pour la tenue à l'ingestion.

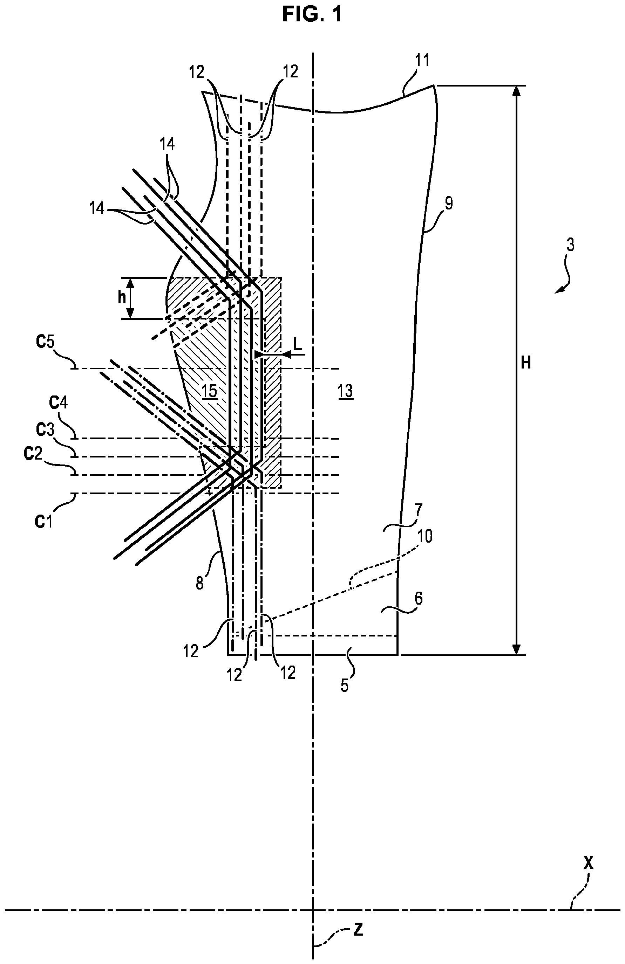

Dans une forme de réalisation illustrée en figure 1, les bords inférieur 15a et supérieur 15b de la deuxième portion 15 sont globalement parallèles à l'axe X de rotation de la soufflante tandis que son bord vertical 15c est globalement parallèle à l'axe d'empilement Z.

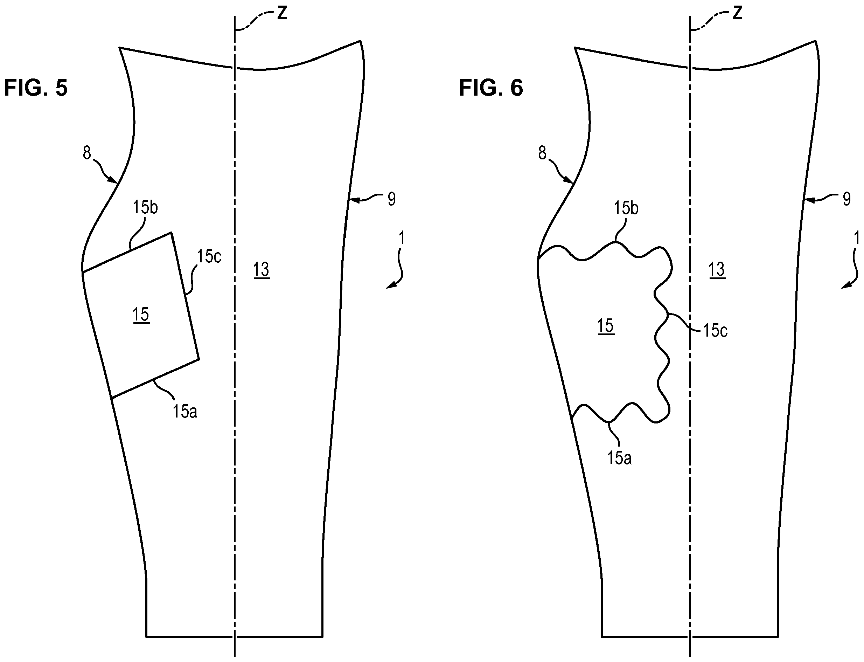

Dans une variante de réalisation illustrée en figures 5 et 6, les bords inférieur 15a et supérieur 15b de la deuxième portion 15 sont au moins partiellement inclinés par rapport à l'axe X de rotation de la soufflante afin d'éviter que la transition entre la deuxième portion 15 et la première portion 13 ne soit parallèle à l'axe de l'impact de l'oiseau. Par exemple, les bords inférieur 15a et supérieur 15b de la deuxième portion peuvent être sensiblement rectilignes et être inclinés d'un angle compris entre 10° et 20° par rapport à l'axe X de la soufflante, soit en direction du sommet (comme cela est illustré en figure 5), soit en direction du pied 5. De la sorte, la pliure formée par l'impact de l'oiseau est éloignée de la portion intermédiaire 16, qui reste plus fragile que la première portion 13 et la deuxième portion 15 et crée donc une zone de rupture privilégiée. Dans un autre exemple, les bords inférieur 15a et supérieur 15b de la deuxième portion 15 peuvent être ondulés (forme sensiblement sinusoïdale) (voir figure 6). Alternativement, les bords 15a, 15b peuvent à la fois être inclinés et ondulés.

Le cas échéant, le bord vertical 15c de la deuxième portion 15 peut également être incliné par rapport à l'axe d'empilement Z afin que ce bord ne se trouve pas parallèle aux fils de chaîne et réduise ainsi l'impact de l'introduction des deuxièmes torons 14 dans la portion intermédiaire 16. De manière analogue aux bords inférieur 15a et supérieur 15b, le bord vertical 15c peut être rectiligne et ou ondulé et/ou peut être incliné d'un angle compris entre 10° et 20° par rapport à l'axe d'empilement Z.

La hauteur h (dimension suivant l'axe d'empilement Z) de la portion intermédiaire 16 est déterminée en fonction du dimensionnement de l'aube 3, et donc du type de soufflante 1 et plus généralement de turbomachine dans laquelle la soufflante 1 est destinée à être intégrée.

Dans une forme de réalisation, la hauteur h de la portion intermédiaire 16 (au niveau du bord inférieur 15a et/ou du bord supérieur 15b de la deuxième portion 15) est comprise entre 5% et 30% de la hauteur H de la pale 7. Ainsi, la hauteur h de la portion intermédiaire 16 peut être comprise entre un centimètre et dix centimètres. Par ailleurs, la largeur L (dimension suivant la corde de l'aube 3) de la portion intermédiaire 16 (au niveau du bord vertical 15c de la deuxième portion 15) est comprise entre 5% et 30% de la hauteur H de la pale 7. Ainsi, la largeur L de la portion intermédiaire 16 peut être comprise entre un centimètre et dix centimètres.

La figure 1 représente schématiquement une aube 3 dont le renfort fibreux 4 a été mis en forme à partir d'une préforme fibreuse tissée tridimensionnelle, avant injection de résine ou densification par une matrice et usinage éventuel, afin d'obtenir une aube 3 de soufflante 1 en matériau composite conforme à l'invention. Par tissage tridimensionnel, on comprendra que les torons de chaîne suivent des trajets sinueux afin de lier entre eux des torons de trame appartenant à des couches de torons de trame différentes exception faite de déliaisons, étant noté qu'un tissage tridimensionnel, notamment à armure interlock, peut inclure des tissages 2D en surface. Différentes armures de tissage tridimensionnel peuvent être utilisées, telles que des armures interlock, multi-satin ou multi-voile, par exemple, comme décrit notamment dans le document WO 2006/136755.

Cinq plans de chaîne C1-C5 ont été représentés sur la figure 1. Un plan de chaîne C1-C5 est une vue en coupe de la préforme fibreuse suivant un plan normal à l'axe d'empilement Z. Dans le renfort fibreux 4, chaque plan de chaîne C1, C2, C3, C4, C5 est séparé du plan de chaîne immédiatement adjacent par ou plusieurs une ligne de torons de trame.

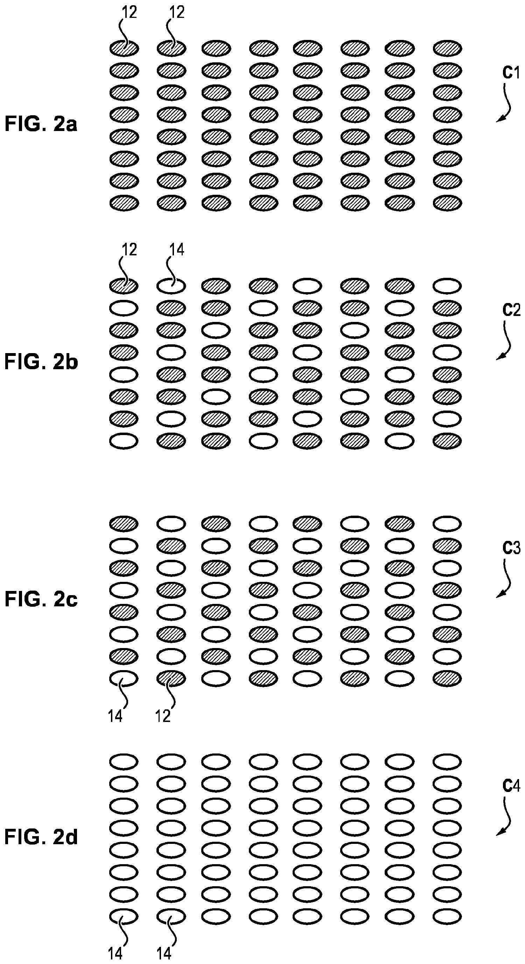

Par ailleurs, les figures 2a à 2d sont des vues du dessus d'une portion des plans de chaîne C1, C2, C3, C4 de la figure 1, dans lesquelles seuls quelques torons de chaîne (c'est-à-dire les torons du renfort fibreux 4 s'étendant suivant l'axe Z d'empilement des sections) ont été représentés, les torons de trame ayant été omis afin de simplifier la lecture des figures. Ces figures illustrent de manière schématique un exemple d'hybridation des torons par insertion des deuxièmes torons 14 en sens chaîne dans la portion intermédiaire 16 qui est adjacente au bord inférieur 15a de la deuxième portion 15.

Comme on peut le voir sur la figure 2a, le premier plan de chaîne C1, qui fait partie de la première portion 13 du renfort fibreux 4, ne comprend que des premiers torons 12. Ce premier plan de chaîne C1 se situe à l'interface avec la portion intermédiaire 16 du renfort 4.

Le deuxième plan de chaîne C2 (figure 2b) fait partie de la portion intermédiaire 16 du renfort fibreux 4, à proximité de son interface avec la première portion 13. Ce deuxième plan de chaîne C2 comprend deux fois plus de premiers torons 12 que de deuxièmes torons 14.

Le troisième plan de chaîne C3 (figure 2c) fait partie de la portion intermédiaire 16 du renfort fibreux 4, à proximité de son interface (qui correspond au bord inférieur 15a) avec la deuxième portion 15. Ce troisième plan de chaîne C3 comprend deux fois plus de deuxièmes torons 14 que de premiers torons 12.

Le quatrième plan de chaîne C4 (figure 2d) fait partie de la deuxième portion 15 du renfort fibreux 4, à l'interface 15 avec la portion intermédiaire 13, et ne comprend que des deuxièmes torons 14.

L'augmentation de densité de deuxièmes torons 14 peut être réalisée en sortant successivement les premiers torons 12 du tissage de la préforme, au niveau des différents plans de chaîne constituant la portion intermédiaire 16, en les coupant au niveau de la surface de la préforme avant injection et en introduisant simultanément les deuxièmes torons 14 entre ces plans de chaîne (voir figure 1). De la sorte, la première portion 13, la deuxième portion 15 et la portion intermédiaire 16 sont formées d'une seule pièce lors du tissage.

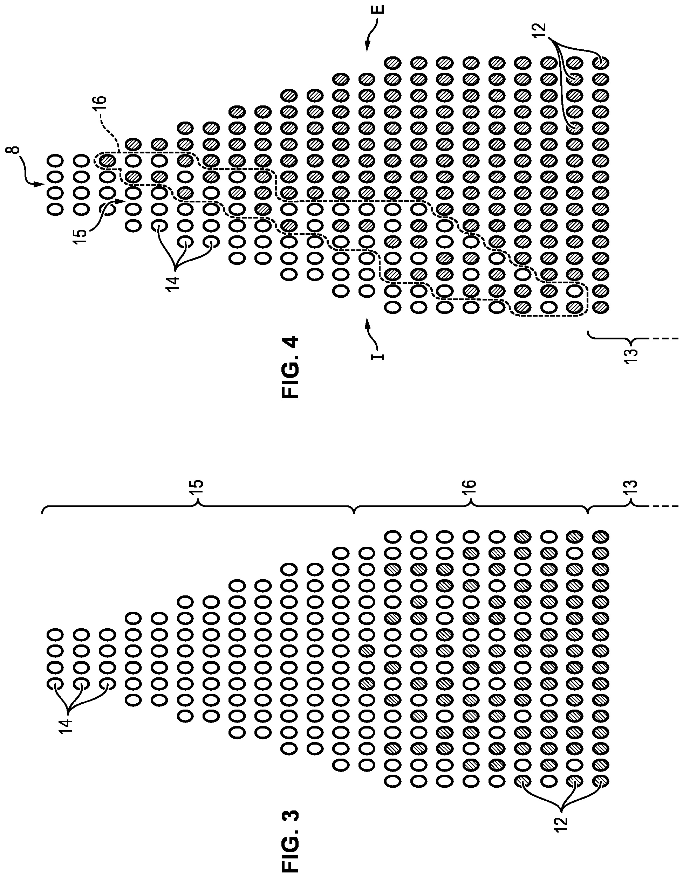

La figure 3 est une vue partielle du dessus du plan de chaîne C5 de la figure 1, qui coupe partiellement la deuxième portion 15, la portion intermédiaire 16 et la première portion 13 et illustre de manière schématique un exemple d'hybridation des torons par insertion des deuxièmes torons 14 en sens chaîne dans la partie de la portion intermédiaire 16 qui est adjacente au bord vertical 15c de la deuxième portion 15. Ici encore, afin de simplifier la figure, seuls les torons de chaîne sont illustrés. Cette vue partielle illustre schématiquement la transition progressive en sens axial (sens corde), avec une densité de deuxième torons 14 qui augmente progressivement en direction de la deuxième portion 15. Dans cet exemple de réalisation, la deuxième portion s'étend sur toute l'épaisseur de l'aube 3 et forme au moins en partie la paroi intrados I et la paroi extrados E.

Dans une variante de réalisation, la deuxième portion 16 ne s'étend pas sur toute l'épaisseur de l'aube 3. En effet, il a été observé que les endommagements ont tendance à s'initier sur la paroi intrados I de l'aube 3. Par conséquent, dans cette variante de réalisation, la deuxième portion 15 du renfort fibreux forme une partie au moins de la paroi intrados I de l'aube 3 mais ne forme pas la paroi extrados E de l'aube. En d'autres termes, la paroi intrados I est formée de deuxièmes torons 14 tandis que la paroi extrados E comprend des premiers torons 12. Le cas échéant, la paroi extrados E peut être formée exclusivement de premiers torons 12.

La figure 4 est une vue partielle du dessus du plan C5 de la figure 1 conforme à cette variante de réalisation. Comme pour la figure 3, cette figure illustre l'hybridation des torons par insertion des deuxièmes torons 14 en sens chaîne dans la partie de la portion intermédiaire 16 qui est adjacente au bord vertical 15c de la deuxième portion 15 et seuls les torons de chaîne sont illustrés. Toutefois, comme cela est visible sur la figure 4, la deuxième portion 15 ne s'étend pas jusqu'à la paroi extrados E. Cette vue partielle illustre schématiquement la transition progressive en sens axial (sens corde) et transversal (dans l'épaisseur de l'aube 3), avec une densité de deuxième torons 16 qui augmente progressivement en direction de la paroi extrados E et du bord de fuite 9.

De manière générale, afin d'assurer la transition des propriétés mécaniques entre la première portion 13 et la deuxième portion 15 du renfort 4 au sein de la portion intermédiaire 16, le pourcentage (par rapport au nombre de torons de chaîne total de la colonne) de deuxièmes torons 14 introduits entre deux colonnes de torons de chaîne immédiatement adjacentes de la portion intermédiaire 16 est au plus égal à 30 %. De préférence, ce pourcentage est compris entre 5 % et 15 %.

Dans la partie de la portion intermédiaire qui s'étend au niveau du bord inférieur 15a ou au niveau du bord supérieur 15b, au plus 30% des torons de chaîne sont modifiés entre deux plans de chaîne immédiatement adjacents (c'est-à-dire séparés par uniquement une ligne de torons de trame). Ainsi, entre deux plans de chaîne successifs (et immédiatement adjacents dans le renfort fibreux 4), au plus 30% des premiers torons 12 sont sortis de la préforme fibreuse formant le renfort fibreux 4 et découpés en surface, et autant de deuxièmes torons 14 sont introduits dans la préforme fibreuse depuis la surface afin de remplacer les premiers torons 12 sortis. De préférence, dans cette partie de la portion intermédiaire 16, entre 5 % et 15 % des torons de chaîne sont modifiés entre deux plans de chaîne immédiatement adjacents.

De même, dans la partie verticale de la portion intermédiaire 16, au niveau du bord vertical 15c, au plus 30% des torons de chaîne sont modifiés entre deux plans de trame immédiatement adjacents (c'est-à-dire séparés par uniquement une colonne de torons de chaîne). Ainsi, entre deux plans de trame successifs (et immédiatement adjacents dans le renfort fibreux 4), au plus 30% des premiers torons 12 sont sortis de la préforme fibreuse formant le renfort fibreux 4 et découpés en surface, et autant de deuxièmes torons 14 sont introduits dans la préforme fibreuse depuis la surface afin de remplacer les premiers torons 12 sortis. De préférence, dans cette partie de la portion intermédiaire 16, entre 5 % et 15 % des torons de chaîne sont modifiés entre deux plans de trame immédiatement adjacents.

Dans une forme de réalisation, les premiers torons 12 présentent un module d'Young E élevé, c'est-à-dire supérieur à 250 GPa, de préférence supérieur à 270 GPa. Leur allongement à la rupture A est par ailleurs compris entre 1.5% et 2.5%.

Par exemple, les premiers torons 12 peuvent comprendre des fibres de carbone, typiquement des fibres de carbone HS* T300 (E = 284 GPa, A = 1.5 %), HS TR30S (E = 356 GPa, A = 1.9 %) ou HS T700 (E = 395 GPa, A = 2.1 %) ou encore des fibres d'aramide à haut module du type Dupont Kevlar 49 (E = 302 GPa, A = 2.4 %).

Les deuxièmes torons 14 peuvent alors présenter un allongement à la rupture compris entre 3% et 6%, de préférence entre 4% et 5%. Par exemple, les deuxièmes torons 14 peuvent comprendre des fibres de verre, typiquement des fibres de verre du type E-GLASS (E = 165 GPa, A = 4.4 %) ou des fibres de verre du type S-2 GLASS (E = 267 GPa, A = 5.2 %), ou des fibres de basalte (E = 227 GPa, A = 3 %) ou encore des fibres polyester (E = 268 GPa, A = 3.5 %).

De manière générale, les configurations décrites sont valables pour des moteurs dont la soufflante peut avoir un diamètre extérieur de l'ordre de 1,8 mètre à 3 mètres. Le nombre d'aubes de la soufflante peut être égal par à 16 ou 18. Quel que soit le diamètre de la soufflante, le nombre d'aubes de soufflante sera réduit autant que possible. Parmi différents critères, un choix de paramètres (notamment de la distance h1) dépendra plus particulièrement du comportement de l'aube de soufflante et de la combinaison « fréquentielle/dimensionnement en ingestion ». En effet, pour une même cible moteur, il est possible de choisir des différentes stratégies de comportements fréquentiels ou réponses fréquentielles en différents cas d'ingestions, par exemple pour repousser les réponses d'aube et d'aubage en évitant des croisements vibratoires avec des harmoniques énergétiques du moteur. Par exemple, il est possible de faire des choix de manière à positionner ces croisements au niveau de régimes moteur transitoires.

L'hybridation des torons du renfort fibreux 4 permet en outre d'ouvrir le champ de conception grâce à l'apport supplémentaire en tenue mécanique. Par exemple, il devient possible d'affiner le profil de l'aube 3 au niveau du bord d'attaque de la préforme 4 ou du bord de fuite de la préforme 4 ou sur toute la hauteur H de la pale 7 en comparaison avec une aube 3 ne comprenant que des premiers torons 12 (à haut module d'Young), ce qui permet d'optimiser la masse de l'aube 3 et les performances aérodynamiques de la soufflante 1 (en obtenant des profils plus fins ou en réduisant le rapport de moyeu, qui est lié à la baisse de l'effort centrifuge induit par la masse de l'aube 3).

## Revendications

1. Aube (3) de soufflante (1) d'une turbomachine comprenant une structure en matériau composite comprenant un renfort fibreux (4) obtenu par tissage tridimensionnel de torons et une matrice dans laquelle est noyé le renfort fibreux (4) ;
la structure en matériau composite comprenant un bord d'attaque (8), un bord de fuite (9), une pale (7) à profil aérodynamique propre à s'étendre dans un flux d'air et un pied (5) configuré pour être fixé à un disque (2) de la soufflante et une échasse (6) s'étendant entre le pied (5) et la pale (7) ;
le renfort fibreux (4) comprenant une première portion (13) formant le bord de fuite (9), une deuxième portion (15) formant tout ou partie du bord d'attaque (8) et une troisième portion (16) s'étendant entre la première portion (13) et la deuxième portion (15) ;
les torons du renfort fibreux (4) comprenant des premiers torons (12) présentant un allongement à la rupture prédéfini et des deuxième torons (10) présentant un allongement à la rupture supérieur à celui des premiers torons (12), la première portion (13) comprenant tout ou partie des premiers torons (12), la deuxième portion (15) comprenant tout ou partie des deuxièmes torons (14) et une densité des deuxièmes torons (14) augmentant progressivement dans la troisième portion (16) de la première portion (13) vers la deuxième portion (15) ; et
les premiers et deuxièmes torons (12, 14) comprenant des torons de chaine distribués de sorte à former des colonnes de chaîne, un pourcentage, par rapport au nombre total de torons de chaîne dans une colonne de chaîne de la troisième portion (16), de deuxièmes torons (14) introduits entre deux colonnes de torons de chaîne immédiatement adjacentes étant au plus égal à 30 %, et de préférence compris entre 5 % et 15 %.

2. Aube (3) selon la revendication 1, dans laquelle la première portion (13) est dépourvue de deuxièmes torons (14) et la deuxième portion (15) comprend des torons de chaîne et des torons de trame et les torons de chaîne de la deuxième portion (15) sont dépourvus de premiers torons (12).

3. Aube selon l'une des revendications 1 ou 2, dans laquelle la deuxième portion (15) s'étend à distance du sommet (11) de l'aube.

4. Aube (3) selon l'une des revendications 1 à 3, dans laquelle la deuxième portion (15) forme le bord de d'attaque (8) sur une partie d'une hauteur (H) de la pale (7).

5. Aube selon la revendication 4, dans laquelle la deuxième portion (15) s'étend sur au moins 35 % d'une hauteur (H) de la pale (7), par exemple entre 35 % et 100 % de la hauteur (H) de la pale (7).

6. Aube (3) selon l'une des revendications 1 à 5, dans laquelle la troisième portion (16) s'étend sur une distance comprise entre 5% et 30% de la hauteur (H) de la pale (7).

7. Aube selon l'une des revendications 1 à 6, présentant en outre une pluralité de plans de chaîne (C1, C2, C3, C4) coupant les colonnes de chaîne, chaque plan de chaîne étant séparé d'un plan de chaîne immédiatement adjacent par une ligne de torons de trame, au plus 30 % des torons de chaîne étant modifiés entre deux plans de chaîne immédiatement adjacents dans la troisième portion qui est intermédiaire (16), et de préférence compris entre 5 % et 15 % des torons de chaîne.

8. Aube selon l'une des revendications 1 à 7, comprenant en outre une paroi intrados (I) et une paroi extrados (E), dans laquelle la deuxième portion (15) du renfort forme au moins en partie la paroi intrados (I) de l'aube (3) tandis que la paroi extrados (E) ne comprend pas de deuxièmes torons (14).

9. Aube selon l'une des revendications 1 à 8, dans laquelle la deuxième portion (15) s'étend sur une portion de longueur de corde comprise entre 10 % et 50 % de la longueur de corde totale de l'aube (3), de préférence comprise entre 20 % et 40 % de ladite longueur de corde totale.

10. Aube (3) selon l'une des revendications 1 à 9, dans laquelle les premiers torons (12) présentent un module d'Young supérieur au module d'Young des deuxièmes torons (14).

11. Aube (3) selon l'une des revendications 1 à 10, dans laquelle l'allongement à la rupture des deuxièmes torons (14) est compris entre 1.5 et 3 fois l'allongement à la rupture des premiers torons (12).

12. Aube (3) selon l'une des revendications 1 à 11, dans laquelle les premiers torons (12) comprennent des fibres de carbone ou d'aramide dont le module d'Young est supérieur à 250 GPa et l'allongement à la rupture est compris entre 1.5 % et 2.5 % et/ou les deuxièmes torons (14) comprennent des fibres de verre ou des fibres de basalte.

13. Aube (3) selon l'une des revendications 1 à 12, dans laquelle l'allongement à la rupture des deuxièmes torons (14) est compris entre 3% et 6%, de préférence entre 4% et 5%.

14. Aube (3) selon l'une des revendications 1 à 13, dans laquelle les deuxièmes torons (14) comprennent des fils de chaîne.

15. Soufflante (1) pour une turbomachine comprenant une pluralité d'aubes (3) conformes à l'une des revendications 1 à 14.

## Patentansprüche

1. Schaufel (3) eines Bläsers (1) einer Turbomaschine mit einer Struktur aus Verbundmaterial, die eine durch dreidimensionales Weben von Strängen erhaltene Faserverstärkung (4) und eine Matrix umfasst, in die die Faserverstärkung (4) eingebettet ist;
die Struktur aus Verbundmaterial eine Vorderkante (8), eine Hinterkante (9), ein Blatt (7) mit einem aerodynamischen Profil, das sich in einen Luftstrom erstrecken kann, und einen Fuß (5), der so konfiguriert ist, dass er an einer Scheibe (2) des Gebläses befestigt werden kann, sowie eine Stelze (6) umfasst, die sich zwischen dem Fuß (5) und dem Blatt (7) erstreckt;
die Faserverstärkung (4) einen ersten Abschnitt (13), der die Hinterkante (9) bildet, einen zweiten Abschnitt (15), der die Vorderkante (8) ganz oder teilweise bildet, und einen dritten Abschnitt (16), der sich zwischen dem ersten Abschnitt (13) und dem zweiten Abschnitt (15) erstreckt, umfasst;
die Stränge der Faserverstärkung (4) erste Stränge (12) mit einer vordefinierten Bruchdehnung und zweite Stränge (10) mit einer höheren Bruchdehnung als die der ersten Stränge (12) umfassen, wobei der erste Abschnitt (13) alle oder einen Teil der ersten Stränge (12) umfasst, wobei der zweite Abschnitt (15) alle oder einen Teil der zweiten Litzen (14) umfasst und eine Dichte der zweiten Litzen (14) in dem dritten Abschnitt (16) von dem ersten Abschnitt (13) zu dem zweiten Abschnitt (15) hin allmählich zunimmt; und
die ersten und zweiten Stränge (12, 14) Kettenstränge umfassen, die so verteilt sind, dass sie Kettenspalten bilden, wobei ein Prozentsatz, bezogen auf die Gesamtzahl der Kettenstränge in einer Kettenspalte des dritten Abschnitts (16), von zweiten Strängen (14), die zwischen zwei unmittelbar benachbarten Kettenstrangspalten eingeführt werden, höchstens 30 % beträgt und vorzugsweise zwischen 5 % und 15 % liegt.

2. Schaufel (3) nach Anspruch 1, wobei der erste Abschnitt (13) keine zweiten Stränge (14) aufweist und der zweite Abschnitt (15) Kettstränge und Schussstränge umfasst und die Kettstränge des zweiten Abschnitts (15) keine ersten Stränge (12) aufweisen.

3. Schaufel nach einem der Ansprüche 1 oder 2, wobei sich der zweite Abschnitt (15) in einem Abstand von der Spitze (11) der Schaufel erstreckt.

4. Schaufel (3) nach einem der Ansprüche 1 bis 3, wobei der zweite Abschnitt (15) die Vorderkante (8) über einen Teil einer Höhe (H) der Schaufel (7) bildet.

5. Schaufel nach Anspruch 4, wobei sich der zweite Abschnitt (15) über mindestens 35 % einer Höhe (H) der Schaufel (7) erstreckt, z. B. zwischen 35 % und 100 % der Höhe (H) der Schaufel (7).

6. Schaufel (3) nach einem der Ansprüche 1 bis 5, wobei sich der dritte Abschnitt (16) über eine Strecke zwischen 5 % und 30 % der Höhe (H) der Schaufel (7) erstreckt.

7. Schaufelblatt nach einem der Ansprüche 1 bis 6, das außerdem eine Vielzahl von Kettenstichebenen (C1, C2, C3, C4) aufweist, die die Kettenstiche schneiden, wobei jede Kettenstichebene von einer unmittelbar benachbarten Kettenstichebene durch eine Reihe von Schusslitzen getrennt ist, wobei höchstens 30 % der Kettlitzen zwischen zwei unmittelbar benachbarten Kettenstichebenen in dem dritten Abschnitt, der dazwischen liegt (16), verändert sind, und vorzugsweise zwischen 5 % und 15 % der Kettlitzen liegen.

8. Schaufel nach einem der Ansprüche 1 bis 7, die außerdem eine Innenwand (I) und eine Außenwand (E) umfasst, wobei der zweite Abschnitt (15) der Verstärkung zumindest teilweise die Innenwand (I) der Schaufel (3) bildet, während die Außenwand (E) keine zweiten Litzen (14) umfasst.

9. Schaufel nach einem der Ansprüche 1 bis 8, wobei sich der zweite Abschnitt (15) über einen Sehnenlängenabschnitt zwischen 10 % und 50 % der gesamten Sehnenlänge der Schaufel (3), vorzugsweise zwischen 20 % und 40 % der gesamten Sehnenlänge, erstreckt.

10. Schaufel (3) nach einem der Ansprüche 1 bis 9, wobei die ersten Litzen (12) einen Young-Modul aufweisen, der größer ist als der Young-Modul der zweiten Litzen (14).

11. Schaufel (3) nach einem der Ansprüche 1 bis 10, wobei die Bruchdehnung der zweiten Litzen (14) zwischen dem 1,5- und 3-fachen der Bruchdehnung der ersten Litzen (12) liegt.

12. Schaufel (3) nach einem der Ansprüche 1 bis 11, wobei die ersten Stränge (12) Kohlenstoff- oder Aramidfasern mit einem Young-Modul von mehr als 250 GPa und einer Bruchdehnung zwischen 1,5 % und 2,5 % umfassen und/oder die zweiten Stränge (14) Glasfasern oder Basaltfasern umfassen.

13. Schaufel (3) nach einem der Ansprüche 1 bis 12, wobei die Bruchdehnung der zweiten Litzen (14) zwischen 3 % und 6 %, vorzugsweise zwischen 4 % und 5 %, liegt.

14. Schaufel (3) nach einem der Ansprüche 1 bis 13, wobei die zweiten Litzen (14) Kettfäden umfassen.

15. Fan (1) für eine Turbomaschine mit einer Vielzahl von Schaufeln (3) gemäß einem der Ansprüche 1 bis 14.

## Claims

1. Blade (3) for a fan (1) of a turbomachine comprising a composite material structure comprising a fibrous reinforcement (4) obtained by three-dimensional weaving of strands and a matrix wherein the fibrous reinforcement (4) is embedded;
the composite material structure comprising a leading edge (8), a trailing edge (9), a blade (7) with an aerodynamic profile able to extend in an air flow and a foot (5) configured to be fixed to a disc (2) of the fan and a stilt (6) extending between the foot (5) and the blade (7);
the fibre reinforcement (4) comprising a first portion (13) forming the trailing edge (9), a second portion (15) forming all or part of the leading edge (8) and a third portion (16) extending between the first portion (13) and the second portion (15);
the strands of the fibre reinforcement (4) comprising first strands (12) having a predefined elongation at break and second strands (10) having an elongation at break greater than that of the first strands (12), the first portion (13) comprising all or part of the first strands (12), the second portion (15) comprising all or part of the second strands (14) and a density of the second strands (14) increasing progressively in the third portion (16) from the first portion (13) to the second portion (15) ; and
the first and second strands (12, 14) comprising warp strands distributed so as to form warp columns, a percentage, relative to the total number of warp strands in a warp column of the third portion (16), of second strands (14) introduced between two immediately adjacent columns of warp strands being at most 30%, and preferably between 5% and 15%.

2. Blade (3) according to claim 1, wherein the first portion (13) is devoid of second strands (14) and the second portion (15) comprises warp strands and weft strands and the warp strands of the second portion (15) are devoid of first strands (12).

3. A vane according to one of claims 1 or 2, wherein the second portion (15) extends away from the tip (11) of the vane.

4. Blade (3) according to one of claims 1 to 3, wherein the second portion (15) forms the leading edge (8) over part of a height (H) of the blade (7).

5. A blade according to claim 4, wherein the second portion (15) extends over at least 35% of a height (H) of the blade (7), for example between 35% and 100% of the height (H) of the blade (7).

6. Blade (3) according to one of claims 1 to 5, wherein the third portion (16) extends over a distance of between 5% and 30% of the height (H) of the blade (7).

7. A blade according to one of claims 1 to 6, further having a plurality of warp planes (C1, C2, C3, C4) intersecting the warp columns, each warp plane being separated from an immediately adjacent warp plane by a line of weft strands, at most 30% of the warp strands being modified between two immediately adjacent warp planes in the third portion which is intermediate (16), and preferably between 5% and 15% of the warp strands.

8. Blade according to one of claims 1 to 7, further comprising an intrados wall (I) and an extrados wall (E), wherein the second portion (15) of the reinforcement at least partly forms the intrados wall (I) of the blade (3) while the extrados wall (E) does not comprise second strands (14).

9. A vane according to one of claims 1 to 8, wherein the second portion (15) extends over a chord length portion of between 10% and 50% of the total chord length of the vane (3), preferably of between 20% and 40% of said total chord length.

10. Blade (3) according to one of claims 1 to 9, wherein the first strands (12) have a Young's modulus greater than the Young's modulus of the second strands (14).

11. Blade (3) according to one of claims 1 to 10, wherein the elongation at break of the second strands (14) is between 1.5 and 3 times the elongation at break of the first strands (12).

12. Blade (3) according to one of claims 1 to 11, wherein the first strands (12) comprise carbon or aramid fibres whose Young's modulus is greater than 250 GPa and whose elongation at break is between 1.5% and 2.5% and/or the second strands (14) comprise glass fibres or basalt fibres.

13. Blade (3) according to one of claims 1 to 12, wherein the elongation at break of the second strands (14) is between 3% and 6%, preferably between 4% and 5%.

14. Blade (3) according to one of claims 1 to 13, wherein the second strands (14) comprise warp yarns.

15. Fan (1) for a turbomachine comprising a plurality of blades (3) in accordance with one of claims 1 to 14.
